# EUROPEAN PATENT SPECIFICATION

(11) **EP 4 245 111 B1**
(45) Date of publication and mention of the grant of the patent: **09.09.2026**
(21) Application number: 22161993.5
(22) Date of filing: 14.03.2022
(51) Int. Cl.: A01B 79/00, A01D 41/127, A01D 43/08, G06Q 50/02

(54) **IMPROVED HARVESTER CONTROL AUTOMATION**
VERBESSERTE STEUERUNGSAUTOMATISIERUNG EINER ERNTEMASCHINE
AUTOMATISATION AMÉLIORÉE DE LA COMMANDE D'UNE MOISSONNEUSE

(43) Date of publication of application: 20.09.2023
(73) Proprietor: CNH Industrial Belgium N.V., 8210 Zedelgem (BE)
(72) Inventor: Delie, Dries, 8920 Poelkapelle (BE); Wenger, Bradley J., Leola, 17540 (US)
(74) Representative: CNH Industrial IP Department

(56) References cited:
- US-A1- 2017 115 862
- US-A1- 2021 195 836
- US-A1- 2021 243 950
- US-B2- 9 707 972

## Description

### TECHNICAL FIELD

The present invention relates to a method of controlling an agricultural harvester during harvesting. The present invention further relates to a computer program product, a system, and an agricultural harvester configured to perform this method.

### BACKGROUND

Modern agricultural harvesters have a lot of operational parameters that can be set while harvesting. In a forage harvester, for example, the user may change a forward drive speed, header height, feed roll speed, or kernel processor configuration while continuing to harvest crop. By adjusting the harvester configuration, the user may increase the crop volume that is taken from the land, adjust a length of cut of the chopped crop that is thrown into the trailer following the harvester, or control the crushing of grain kernels and other plant material by the kernel processor.

With these adjustments, the user tries to achieve various goals such as increasing the amount of crop that is harvested, ensuring that the quality of the harvested crop is optimal, and limiting the use of fuel for driving and operating the harvester. In modern forage harvesters, sensors may be available to inform the user about fuel consumption, harvested volumes, and length of cut, moisture content, ash content, fibre content, protein content, and sugar content of the harvested crop. Based on this information, the user makes his decisions about how to adapt the operational parameters of the harvester to optimise his harvesting results. Often, the various harvesting goals the user may have cannot be achieved simultaneously. Taking in more crop and cutting it into smaller pieces requires more fuel. Raising the header to improve the nutritional value of the harvested crop leads to a lower total volume of harvester material. A lot of experience and guess work is therefore needed to optimally control a forage harvester.

To complicate things even further, the user may often not really be interested in the amount or quality of the harvested crop as such. When the harvested crop is to be used for feeding cattle or generating biogas, the main interest for the user will be to maximise an amount of milk, meat, biogas, or other end product that can be produced with the harvested crop. Adjusting operational parameters of the harvester in order to harvest more crops does not always lead to more end product. This further complicates the decision process for the user operating the forage harvester. US 2017/115862 A1 describes a yield monitoring system for an agricultural harvester with an in-cab display that has at least one configurable user defined window operable to view at least two parameters simultaneously and comparatively in graphical format and in real time.

It is an aim of the present invention to address one or more disadvantages associated with the prior art.

### SUMMARY OF THE INVENTION

According to an aspect of the invention there is provided a method of controlling an agricultural harvester during harvesting. The method comprises the steps of receiving harvesting data, calculating a current yield parameter and a current quality parameter, and controlling at least one operational parameter of the agricultural harvester in dependence of the current yield parameter and/or the current quality parameter. The harvesting data indicates at least an amount of harvested crop and a nutritional attribute of the harvested crop. The current yield parameter represents an amount of end product per unit of harvested area. The current quality parameter represents an amount of end product per amount of harvested crop. The yield and quality parameters are calculated based on the received harvesting data and using a model for predicting an amount of end product that can be produced with the harvested crop. The end product may, e.g., be milk, meat, or biogas and the nutritional attribute of the harvested crop may include at least one of a moisture content, a protein content, and a fat content.

The method according to the invention brings the advantage that the harvester control is not just optimised to harvest the largest possible amount of crop or crop with a certain specified sugar content. Instead, the controller is really capable of optimising the harvester configuration in function of the amount of obtainable end product. When prioritising yield, the controller may, for example, apply the optimal harvester configuration for maximising the amount of obtainable end product per square metres (or per acre) of harvested field. When prioritising quality, the controller may, for example, apply the optimal harvester configuration for maximising the amount of obtainable end product per tonne of harvested crop.

A preferred embodiment of the method according to the invention further comprises receiving a priority setting indicative of a preference for optimising the amount of harvested crop, the amount of end product that can be produced with the harvested crop, or the current quality parameter, and wherein controlling the at least one operational parameter of the agricultural harvester further depends on the priority setting. Different priority settings may be available for selection too. For example, fuel efficiency may be one of the aspects to prioritise and the controller may control the at least one operational parameter of the agricultural harvester depending on a fuel consumption estimate. Instead of selecting only one aspect for the controller to prioritise, the user may be allowed to select two or more key aspects, possibly with an opportunity to indicate a relative importance of the selected aspects.

The at least one operational parameter of the agricultural harvester that is controlled using the method according to the invention may, for example, include adapting a driving speed, adapting a header height, adapting a rotational speed of the feed rolls, or adapting an operational parameter of a kernel processor.

According to a further aspect of the invention a computer program product is provided comprising instructions executable by a computer which instructions, when executed by the computer, cause the computer to carry out a method as described above.

According to yet a further aspect of the invention, a system is provided for controlling an agricultural harvester during harvesting. The system comprises a yield sensor for measuring an amount of harvested crop, a crop content sensor for measuring an attribute of the harvested crop, and a controller, operatively coupled to the yield sensor and the crop content sensor and configured to perform a method as described above. Preferably, the system is part of an agricultural harvester such as a forage harvester.

### BRIEF DESCRIPTION OF THE DRAWINGS

Embodiments of the invention will now be described by way of example with reference to the accompanying drawings.
Figure 1 shows a side view of a forage harvester wherein the invention may be implemented.
Figure 2 shows a schematic diagram with some essential elements for the method and system according to the invention.
Figures 3 to 6 show various dynamic harvest charts as may be displayed when using the forage harvester of Figure 1.

### DETAILED DESCRIPTION

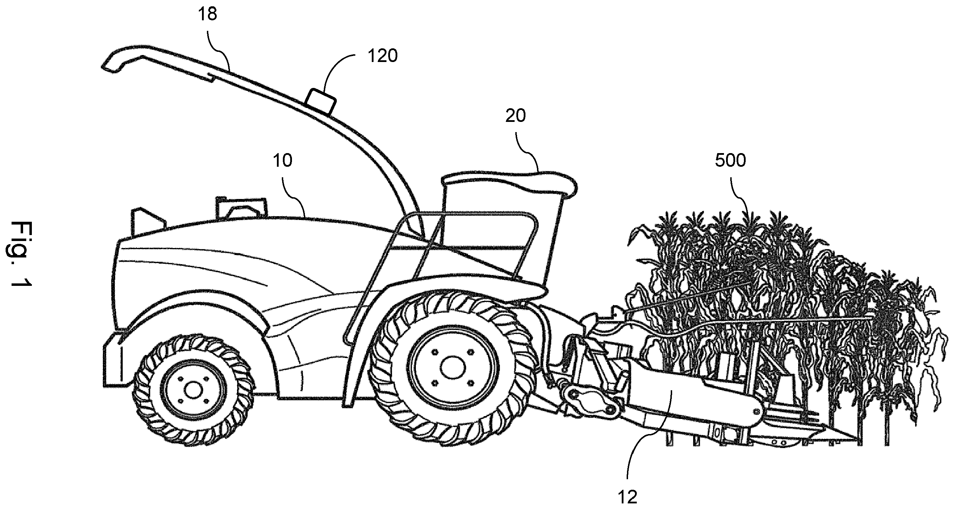

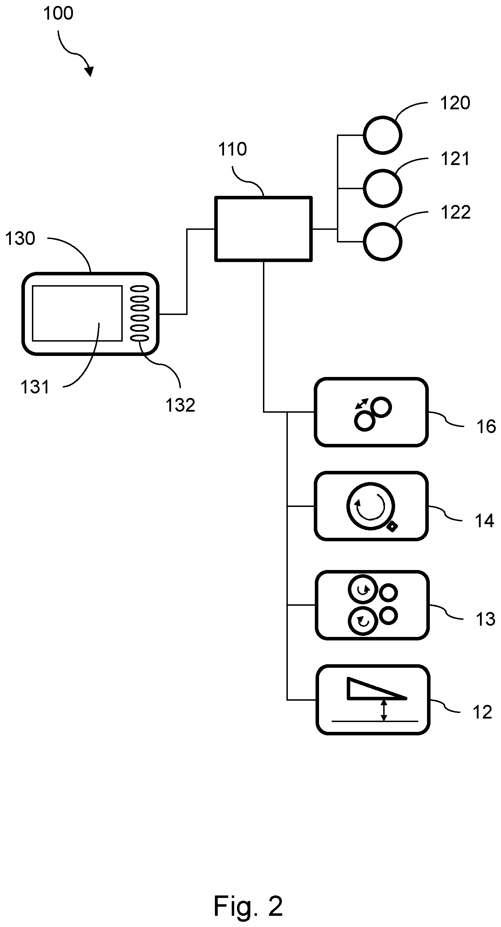

Figure 1 shows an agricultural harvester in the form of a forage harvester 10. Figure 2 shows a schematic diagram with some functional elements of this forage harvester 10. The forage harvester 10 is configured to harvest crops 500 such as corn and grass that can be used in the production of animal feed. To this end, a header 12 is attached to a front end of the forage harvester 10. The header 11 is adjustable in height and configured to cut and gather the crop 500 from a field as the forage harvester 10 moves forward. A set of feed rolls 13 is arranged to draw the cut crop from the header into a crop flow channel, where the crop is processed. The processed crop is then guided into a spout 18, accelerated by a blower (not shown), and discharged into a trailer that may drive alongside or behind the forage harvester 10.

The processing of the harvested crop typically involves chopping the crop 500 into smaller pieces using a cutter drum 14 and, optionally, a step of crushing the cut crop using a crop processor 16. The cutter drum 14 cuts the crop 500 between a rotating drum and a counter knife. The length of cut depends on the relative speed of the feed rolls 13 and the cutter drum 14. While the rotational speed of the cutter drum 14 is often directly linked to the engine speed, length of cut adjustments are typically realised by controlling the rotational speed of the feed rolls 13. The faster the feed rolls 13, the longer the crop pieces.

The crop processor 16, also called kernel processor 16, is positioned downstream the cutter drum 14 and made up of two toothed rolls with a very small gap therebetween. The main function of the kernel processor 16 is to crush corn and other cereal grains that easily pass the cutter drum 14 to release the nutritious content of the kernels. Similarly, the kernel processor 16 may be used to release more of the nutritious content of non-grain material. Often, the gap between the two toothed rolls can be adapted to control the operation of the kernel processor 16.

Adjusting operational parameters of the forage harvester 10, such as by changing the drive speed of the forage harvester 10, the height of the header 12, the rotational speed of the feed rolls 13, or the size of the gap between the toothed rolls of the kernel processor 16 may affect the volume and content of the harvested crop as it is gathered in the trailer.

Additionally, such adjustments to the operational parameters influence the fuel consumption of the forage harvester 10. For example, lowering the header 12 will cause more crop 500 to be taken from the field and more fuel to be consumed for the processing of that crop 500. Also lowering the speed of the feed rolls 13 or reducing the gap between the kernel processor rolls 16 leads to a higher fuel consumption.

The operation of the forage harvester 10 and its various functional parts is controlled by one or more electronic controllers 110. A display unit 130 is operatively coupled to the controller 110 to show relevant operational information on a screen 131. The display unit 130 may further provide a graphical user interface, enabling the user to control what information is shown and to adjust one or more operational parameters when needed. The user interface may be controlled using hardware buttons 132 provided on the display unit or using on-screen buttons if the screen 131 is equipped with touch screen functionality.

Control of the harvester operation may at least partly be automatic, based on various sensors 120, 121, 122 that are provided for obtaining real-time information about the forage harvester 10 and/or the crop moving through it. For example, a video camera and/or NIR (Near InfraRed) sensor 120 may be provided at the spout 18 to monitor the crop moving through the spout. Based on this and other information, the controller 110 may generate instructions to show relevant information on screen 131 and/or to adjust one or more operational parameters of the forage harvester 10.

In an embodiment of the invention, harvesting data indicative of at least an amount of harvested crop 500 and a nutritional attribute of the harvested crop is gathered by the controller 110. The nutritional attribute may, e.g., include at least one of a moisture content, a protein content, and a fat content of the harvested crop. Such nutritional attributes may, e.g., be monitored using the NIR sensor 120 provided at the spout 18. Based on the received harvesting data, the controller then calculates a current yield parameter and a current quality parameter.

The current yield parameter represents an amount of crop that is being harvested and may, e.g., be expressed in tonnes per hour or tonnes per square metres (or per acre). The current quality parameter provides a measure for the quality of the cut crop. Important crop aspects determining the quality are, e.g., its moisture level, length of cut, ash content, fibre content, sugar content, and protein content. Other crop attributes, such as a colour profile, may be taken into account too. The controller 110 may use a predetermined model or formula for converting multiple quality-related crop parameters into a single current quality parameter. This model or formula may be crop-dependent and/or user-adjustable in order to allow the user to prioritise some crop attributes over other when desired.

Preferably, the current quality parameter is calculated using a model for predicting an amount of end product that can be produced with the harvested crop. The more end product can be obtained from a tonne of harvested crop, the higher the quality of the crop. For example, the end-product may be the amount of milk or meat that can be produced by a cow after having consumed the now harvested crop. If, for example, the crop is used for the production of biogas, the quality parameter may be expressed as a biogas volume obtainable per tonne of harvested crop. The current yield parameter may be calculated using such a model too. For example, the yield may be expressed as an amount of end product per hour, per square metres (or per acre). A known model that may be used for this purpose is the MILK2006 model developed by Randy Shaver et al of the University of Wisconsin. This model uses measured characteristics of the harvested crop, such as fibre content, ash content, and fat content to calculate how much milk an average cow will be able to produce per kg of consumed crop.

It is to be noted that the word 'current' in current yield parameter and current quality parameter refers to the most recently obtained harvesting data. However, this does not necessarily mean that only the last sensor readings are taken into account when calculating the current yield parameter and the current quality parameter. For example, the current yield and quality parameters may be determined on the basis of harvesting data obtained in the last 5, 10, 20, or 30 seconds. Alternatively, the current yield and quality parameters may be determined by averaging the harvesting data over the complete period since the most recent change to at least one of the operational parameters of the forage harvester 10.

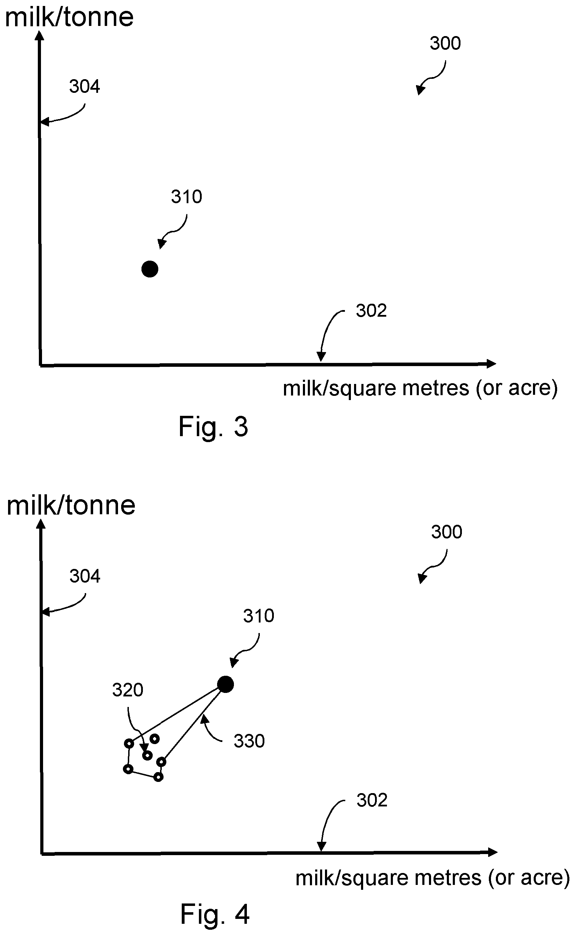

After having calculated the current yield and quality parameters, the controller 110 may then display these parameters to the user on the display screen 131 and/or use them for controlling the operation of the harvester 10. Figures 3 to 6 show various dynamic harvest charts 300 as may be used for displaying the current yield and quality parameters. The dynamic harvest charts 300 shown here have a horizontal yield axis 302 and a vertical quality axis 304. In this example, yield is measured in tonnes or litres of milk per square metres (or per acre) of harvested land. Quality may be measured in tonnes or litres of milk per tonne of harvested crop. In Figure 3, a dynamic harvest chart 300 is shown, just after harvesting has started or a dynamic chart module has been activated. This dynamic chart 300 therefore only shows a single datapoint 310. The datapoint 310 is positioned in the dynamic harvest chart 300 at a datapoint location along the yield axis 302 and the quality axis 304 and thereby indicates the current yield parameter and the current quality parameter. The current yield and quality parameters have just been calculated by the controller 110 based on the recently obtained harvesting data.

Figure 4 shows how this dynamic harvest chart 300 may subsequently evolve during the harvesting process. The initial datapoint and some subsequent past datapoints 320 are displayed as smaller circles, while the most recent datapoint 310, like in Figure 3, is indicated with a larger black dot. In addition thereto, the dynamic harvest chart 300 uses black lines 330 to indicate a datapoint space wherein all the datapoints 310, 320 collected during the current harvesting operation are shown. Like the past datapoints 320, the datapoint space will appear and form gradually during the harvesting process. In an embodiment of the invention, the dynamic data chart 300 may further show historic datapoints that relate to previous harvesting sessions in the same field and/or with the same harvester 10. Such historic datapoints may be indicated using a different colour, shape, or size. Some or all of the past datapoints 320 and/or historic datapoints may change appearance and/or completely disappear over time, while new datapoints 310, 320 are added the dynamic harvest chart 300.

As is clear from the dynamic harvest chart 300 in Figure 4, the current yield and the current quality parameter may increase simultaneously. This may, e.g., be caused by a change in header height. When raising the header 12 of the forage harvester 10, a larger portion of the harvested crop will have a high nutritional value. Even though the total amount of harvested crop will be smaller, the increased nutritional value may more than compensate for that. There is only a limited amount of food that a cow can eat and digest per day and part of the energy derived from its food is needed for the eating and digesting. Hence, as illustrated in Figure 4, a lower volume of high-quality crop may not only result in higher quality (milk/tonne), but in a higher yield (milk/ square metres or acre) too.

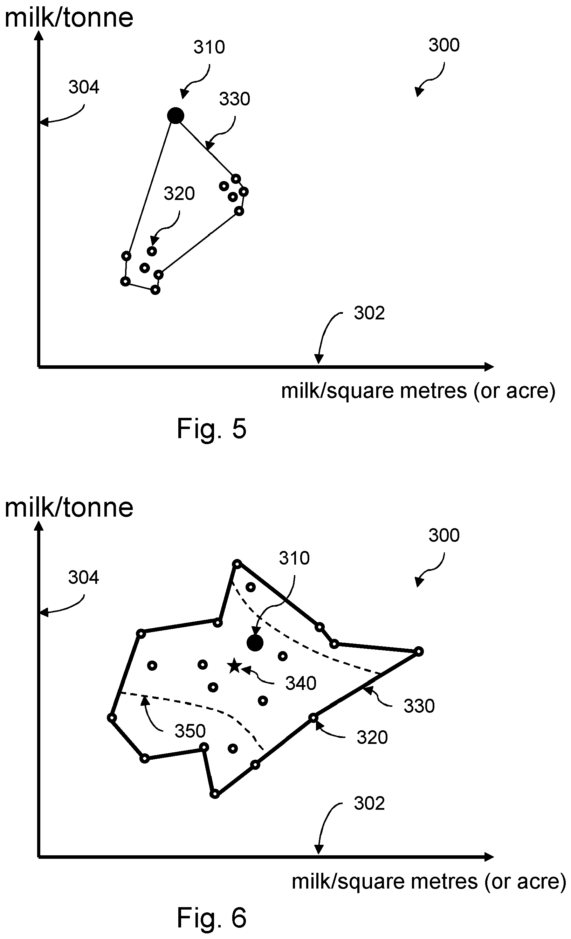

The dynamic harvest chart 300 of Figure 5 shows how, when the header 12 is raised even further, the current quality parameter may improve, while the current yield parameter decreases. If the user is primarily concerned with the quality of the harvested crop, he may be happy with the recent header height adjustments. If yield is more important, the information shown on the dynamic chart may make him decide to lower the header height again and return to a configuration for which one or more past datapoints 320 in the dynamic harvest chart 300 already indicate that it may allow for a higher yield. Optionally, the user interface may allow the user to select one of the past datapoints 320 for inspecting and/or activating the corresponding harvester configuration.

In Figure 6, a dynamic harvest chart 300 with some extra optional features is shown. For example, a star shaped average datapoint 340 indicates the average yield and quality parameter over the complete harvesting session. Alternatively, average datapoints may be shown indicating the average yield and quality parameters over different sections of the field. Like in Figures 4 and 5, the datapoint space is delimited by solid black lines 330. In addition thereto, dotted lines 350 are used to separate the datapoint space into, e.g., three different zones. The zone in the lower left part of the datapoint space comprises datapoints 320 corresponding to relatively low yield as well as quality. The zone in the upper right corner corresponds to the more desirable situation wherein both the yield and the quality are high. The different zones in this dynamic harvest chart 300 may be colour coded, e.g. using red, yellow, and green, for clearly indicating to the user when the harvester 10 is working in a close-to-optimal configuration and when some re-configuration may be desired to improve the harvesting results. It is an important advantage of the current invention that the dynamic harvest chart 300 is built up while harvesting. This enables the user to find the optimal harvester configuration for the particular field and crop that is being harvested.

In addition to yield and quality information, the dynamic harvest charts 300 may provide information about the fuel consumption of the harvester 10. When changing operational settings of the harvester 10, such as its forward drive speed, header height, feed roll speed, or kernel processor configuration, the fuel consumption may change too. Relative changes in fuel consumption may, e.g., be indicated in the dynamic harvest charts 300 by colour coding the datapoints 310, 320, or by adding a third dimension to the dynamic harvest charts 300. More detailed fuel consumption information may be made available for the most recent datapoint 310 and/or when the user selects a particular datapoint 310, 320 in the dynamic harvest chart 300. By providing information about the fuel consumption too, the user gets the opportunity to balance yield and quality with the amount of fuel needed to obtain that yield and quality. For example, if only a small gain in yield or quality is shown to come with a large increase in fuel consumption, the user may decide to revert to an earlier more fuel-efficient configuration.

In embodiments of the invention, the controller 110 may be configured to automatically find and apply the optimal harvester configuration, based on the yield and quality parameters it derives from the harvesting data. The user may be offered the option to have the harvester configuration optimised for either yield, quality, fuel efficiency, or a well-defined balance between two or three of these parameters. During harvesting, the controller 110 then monitors the current yield and quality parameters, as well as the current fuel consumption. When the controller 110 makes small adjustments to one or more of the operational parameters of the harvester 10, a change in yield, quality and/or fuel efficiency may be observed. If this change is in accordance with the optimisation goals set by the user, the configuration adjustment is maintained. If not, the harvester 10 will revert to its previous configuration. Many different optimisation algorithms are available for the skilled person to configure the controller 110 such that it can control the harvester 10 in accordance with the user's optimisation preferences. Such optimisation algorithms may, e.g., make use of decision trees, fuzzy logic, machine learning, and neural networks.

## Claims

1. A method of controlling an agricultural harvester (10) during harvesting, the method comprising the steps of:
receiving harvesting data indicative of at least an amount of harvested crop (500) and a nutritional attribute of the harvested crop,
based on the received harvesting data and using a model for predicting an amount of end product that can be produced with the harvested crop (500), calculating a current yield parameter and a current quality parameter, the current yield parameter representing an amount of end product per unit of harvested area, the current quality parameter representing an amount of end product per amount of harvested crop (500), and
controlling at least one operational parameter of the agricultural harvester in dependence of the current yield parameter and/or the current quality parameter wherein the end product is milk, meat, or biogas.

2. A method of controlling an agricultural harvester according to claim 1, wherein the nutritional attribute of the harvested crop includes at least one of a moisture content, a protein content, and a fat content.

3. A method of controlling an agricultural harvester according to claim 1, further comprising receiving a priority setting indicative of a preference for optimising the amount of harvested crop, the amount of end product that can be produced with the harvested crop, or the current quality parameter, and wherein controlling the at least one operational parameter of the agricultural harvester further depends on the priority setting.

4. A method of controlling an agricultural harvester according to claim 1, further comprising calculating a fuel consumption estimate based on the received harvesting data, and wherein controlling the at least one operational parameter of the agricultural harvester further depends on the fuel consumption estimate.

5. A method of controlling an agricultural harvester according to claim 1, wherein controlling the at least one operational parameter of the agricultural harvester includes at least one of:
adapting a driving speed,
adapting a header height,
adapting a rotational speed of a feed roll, and
adapting an operational parameter of a kernel processor.

6. A computer program product comprising instructions executable by a computer which instructions, when executed by the computer, cause the computer to carry out a method as claimed in any of claims 1 to 5.

7. A system for controlling an agricultural harvester during harvesting, the system comprising:
a yield sensor for measuring an amount of harvested crop,
a crop content sensor for measuring a nutritional attribute of the harvested crop, and
a controller, operatively coupled to the yield sensor and the crop content sensor and configured to perform a method as claimed in any of claims 1 to 5.

8. An agricultural harvester comprising a system as claimed in claim 7.

9. An agricultural harvester as claimed in claim 8, wherein the agricultural harvester is a forage harvester.

## Patentansprüche

1. Verfahren zum Steuern einer landwirtschaftlichen Erntemaschine (10) während des Erntevorgangs, wobei das Verfahren die Schritte umfasst:
Empfangen von Erntedaten, die mindestens eine Menge an geerntetem Erntegut (500) und eine Nährwerteigenschaft des geernteten Ernteguts angeben,
basierend auf den empfangenen Erntedaten und unter Verwendung eines Modells zum Vorhersagen einer Menge an Endprodukt, die mit dem geernteten Erntegut (500) hergestellt werden kann, Berechnen eines aktuellen Ertragsparameters und eines aktuellen Qualitätsparameters, wobei der aktuelle Ertragsparameter eine Menge an Endprodukt pro Einheit der geernteten Fläche repräsentiert, wobei der aktuelle Qualitätsparameter eine Menge an Endprodukt pro Menge an Erntegut (500) repräsentiert, und
Steuern mindestens eines Betriebsparameters der landwirtschaftlichen Erntemaschine in Abhängigkeit von dem aktuellen Ertragsparameter und/oder dem aktuellen Qualitätsparameter, wobei das Endprodukt Milch, Fleisch oder Biogas ist.

2. Verfahren zum Steuern einer landwirtschaftlichen Erntemaschine nach Anspruch 1, wobei das Nährwertattribut des geernteten Ernteguts mindestens eines von einem Feuchtigkeitsgehalt, einem Proteingehalt und einem Fettgehalt einschließt.

3. Verfahren zum Steuern einer landwirtschaftlichen Erntemaschine nach Anspruch 1, ferner umfassend das Empfangen einer Prioritätseinstellung, die eine Präferenz zum Optimieren der Menge an geerntetem Erntegut, der Menge an Endprodukt, die mit dem geernteten Erntegut produziert werden kann, oder des aktuellen Qualitätsparameters anzeigt, und wobei das Steuern des mindestens einen Betriebsparameters der landwirtschaftlichen Erntemaschine ferner von der Prioritätseinstellung abhängt.

4. Verfahren zum Steuern einer landwirtschaftlichen Erntemaschine nach Anspruch 1, ferner umfassend das Berechnen einer Kraftstoffverbrauchsschätzung basierend auf den empfangenen Erntedaten, und wobei das Steuern des mindestens einen Betriebsparameters der landwirtschaftlichen Erntemaschine ferner von der Kraftstoffverbrauchsschätzung abhängt.

5. Verfahren zum Steuern einer landwirtschaftlichen Erntemaschine nach Anspruch 1, wobei das Steuern des mindestens einen Betriebsparameters der landwirtschaftlichen Erntemaschine mindestens eines einschließt von:
Anpassen einer Fahrgeschwindigkeit,
Anpassen einer Schneidwerkhöhe,
Anpassen einer Drehzahl einer Förderwalze und
Anpassen eines Betriebsparameters eines Körneraufbereiters.

6. Computerprogrammprodukt, umfassend von einem Computer ausführbare Anweisungen, wobei die Anweisungen, wenn sie von dem Computer ausgeführt werden, bewirken, dass der Computer ein Verfahren nach einem der Ansprüche 1 bis 5 ausführt.

7. System zum Steuern einer landwirtschaftlichen Erntemaschine während des Erntevorgangs, wobei das System umfasst:
einen Ertragssensor zum Messen einer Menge an geerntetem Erntegut,
einen Erntegutgehaltsensor zum Messen einer Nährwerteigenschaft des geernteten Ernteguts und
eine Steuerung, die mit dem Ertragssensor und dem Erntegutgehaltsensor wirkverbunden und konfiguriert ist, um ein Verfahren nach einem der Ansprüche 1 bis 5 durchzuführen.

8. Landwirtschaftliche Erntemaschine, umfassend ein System nach Anspruch 7.

9. Landwirtschaftliche Erntemaschine nach Anspruch 8, wobei die landwirtschaftliche Erntemaschine ein Feldhäcksler ist.

## Revendications

1. Procédé pour la commande d'une récolteuse agricole (10) pendant la récolte, le procédé comprenant les étapes consistant à :
recevoir des données de récolte indiquant au moins une quantité de culture récoltée (500) et un attribut nutritionnel de la culture récoltée,
calculer, en fonction des données de récolte reçues et à l'aide d'un modèle permettant de prédire une quantité de produit final qui peut être produite avec la culture récoltée (500), un paramètre de rendement actuel et un paramètre de qualité actuel, le paramètre de rendement actuel représentant une quantité de produit final par unité de superficie récoltée, le paramètre de qualité actuel représentant une quantité de produit final par quantité de culture récoltée (500), et
commander au moins un paramètre de fonctionnement de la récolteuse agricole en fonction du paramètre de rendement actuel et/ou du paramètre de qualité actuel, dans lequel le produit final est du lait, de la viande ou du biogaz.

2. Procédé de commande d'une récolteuse agricole selon la revendication 1, dans lequel l'attribut nutritionnel de la culture récoltée comporte au moins l'une parmi une teneur en humidité, une teneur en protéines et une teneur en matières grasses.

3. Procédé pour la commande d'une récolteuse agricole selon la revendication 1, comprenant en outre la réception d'un réglage de priorité indiquant une préférence pour l'optimisation de la quantité de culture récoltée, de la quantité de produit final qui peut être produite avec la culture récoltée ou du paramètre de qualité actuel, et dans lequel la commande de l'au moins un paramètre de fonctionnement de la récolteuse agricole dépend en outre du réglage de priorité.

4. Procédé pour la commande d'une récolteuse agricole selon la revendication 1, comprenant en outre le calcul d'une estimation de consommation de carburant en fonction des données de récolte reçues, et dans lequel la commande de l'au moins un paramètre de fonctionnement de la récolteuse agricole dépend en outre de l'estimation de consommation de carburant.

5. Procédé pour la commande d'une récolteuse agricole selon la revendication 1, dans lequel la commande de l'au moins un paramètre de fonctionnement de la récolteuse agricole comporte au moins l'une parmi :
l'adaptation d'une vitesse de conduite,
l'adaptation d'une hauteur de tête de coupe,
l'adaptation d'une vitesse de rotation d'un rouleau d'alimentation, et
l'adaptation d'un paramètre de fonctionnement d'un éclateur de grains.

6. Produit-programme informatique comprenant des instructions pouvant être exécutées par un ordinateur, lesquelles instructions, lorsqu'elles sont exécutées par l'ordinateur, amènent l'ordinateur à mettre en œuvre un procédé selon l'une quelconque des revendications 1 à 5.

7. Système de commande d'une récolteuse agricole pendant la récolte, le système comprenant :
un capteur de rendement permettant de mesurer une quantité de culture récoltée,
un capteur de teneur de culture permettant de mesurer un attribut nutritionnel de la culture récoltée, et
un dispositif de commande, couplé de manière fonctionnelle au capteur de rendement et au capteur de teneur de culture et configuré pour réaliser un procédé selon l'une quelconque des revendications 1 à 5.

8. Récolteuse agricole comprenant un système selon la revendication 7.

9. Récolteuse agricole selon la revendication 8, dans laquelle la récolteuse agricole est une ensileuse.
